# EUROPEAN PATENT APPLICATION

(11) **EP 2 854 328 A1**
(43) Date of publication of application: **01.04.2015**
(21) Application number: 13306331.3
(22) Date of filing: 27.09.2013
(51) Int. Cl.: H04L 9/08, H04B 10/00, H04J 14/02, H04Q 11/00

(54) **Method for providing safe communication optical burst switching network**

(71) Applicant: ALCATEL LUCENT, 92100 Boulogne-Billancourt (FR)
(72) Inventor: Loehr, Jürgen, 70435 Stuttgart (DE); Cazzaniga, Giorgio, 20059 Vimercate (IT); Hermsmeyer, Christian, 70435 Stuttgart (DE)
(74) Representative: MERH-IP Matias Erny Reichl Hoffmann

(57) **Abstract**

The present document relates to a method for secure communication in an optical burst switching (OBS) network (1), wherein a network node (2) of the OBS network (1) performs:
- receiving transmission data from a client entity coupled with the network node (2), the transmission data to be transmitted by the network node (2) to another network node in the OBS network (1);
- applying a cryptographic function on the transmission data resulting in cryptographic modified data; and
- transmitting the cryptographic modified data via the OBS network (1) to the another network node,

the network node (2) further performing:
- receiving cryptographic modified data from the another network node; and
- applying an inverse cryptographic function on the received cryptographic modified data.

## Description

The present document relates to optical burst switching networks. In particular, the present document relates to a method for providing safe communication in an optical burst switching network.

Optical burst switching (OBS) is an optical networking technique that allows dynamic sub-wavelength switching of data. In an optical burst switching (OBS) network, a basic data unit is a data burst. A data burst may be composed of a plurality of data packets, for example IP packets. For routing the data bursts through the OBS network, OBS control information is sent separately in a reserved optical channel and in advance of the data payload. Said control information is processed in order to allow a timely setup of an optical light path for the soon-to-arrive optical burst. Alternatively, OBS control information may be computed in a logically centralized instance and distributed to the nodes of an OBS network via other means, e.g. a communication network separate from the OBS network.

An OBS network typically includes a plurality of network nodes. In contrary to optical point-to-point transmissions between network nodes, e.g. WDM-transmissions via fiber between a transmitting and a receiving network node, communication within the OBS network has broadcast character, i.e. all network nodes within the OBS network can in principle receive the data which are addressed to a certain network node. In other words, the OBS network represents a shared medium for the transmitted payload similar to wireless transmission, e.g. radio communication. In addition, the wavelength or time slot used for transmission by the respective network nodes is configured by agreement, but a misuse may not be detected or prevented.

Therefore, in OBS networks different safety risks can be considered that could be leveraged intentionally or unintentionally:
- break of confidentiality, i.e. transmitted data are available to someone who should not know. For example, an OBS network node receives information of another OBS network node which tuned to a wrong wavelength or a wrong time slot;
- break of integrity, i.e. the information received at the receiving network node is different to the information sent by the transmitting network node. For example, an OBS network node through which the data is routed was manipulated in order to change the transmitted information;
- break of authenticity, i.e. the received information was not transmitted by the intended transmitting network node. For example, an OBS network node transmits at a wrong wavelength thereby or additionally blocking the valid network node. Thus, the receiving network node may believe to receive information from the intended network node but receives information from another network node.

Hence, there is a need to provide for an improved method for transmitting data through an OBS network which remedies inherent safety risks of the OBS network. Similarly, network nodes with improved security features are desired.

According to a first aspect, a method for secure transmission of data from a network node, in the following also referred to as transmitting network node, to another network node, in the following also referred to as receiving network node, through an optical burst switching (OBS) network is described. The OBS network may comprise a plurality of OBS network nodes which are communicating with each other according to a certain scheduling. In general, the OBS network has broadcast character, i.e. regardless of the scheduling, a communication between two network nodes can be also received by all other network nodes.

For realizing a secure communication between a subset of OBS network nodes, preferably between each pair of OBS network nodes, the OBS network nodes are adapted to perform a safe communication functionality, e.g. by applying a cryptographic function on transmission data and received data. The safe communication functionality may implement a safety mechanism which ensures the confidentiality and/or integrity of transmitted data and/or the authenticity of the transmitting OBS network node.

In embodiments, after receiving a transmission request from a client entity (e.g. a computer coupled to the transmitting network node) for transmitting data from the transmitting network node to the receiving network node, the data to be transmitted may be received by the transmitting network node, e.g. via a client interface. For enhancing the data security, a cryptographic function may be applied to the transmission data. The cryptographic function may be any function which ensures an enhancement of the data security level, especially cryptographic functions enhancing the confidentiality, integrity of the transmission data and/or authenticity of the transmitting network node. By applying the cryptographic function on the transmission data, said transmission data are transformed or converted into cryptographic modified data which are transmitted to the receiving network node, possibly together with other information. The cryptographic modified data may comprise the transmission data as data payload in a plain, cryptographically unmodified version or in a cryptographically modified version, depending on whether improved confidentiality, integrity and/or authenticity is desired.

In embodiments, the network node is configured as OBS transceiver, i.e. the network node further performs receiving of cryptographic modified data which were transmitted by another network node. The network node may perform an inverse cryptographic function on the received cryptographic modified data. By applying the inverse cryptographic function, the cryptographic protection of the received data may be reverted. Specifically, by applying said inverse cryptographic function on the received cryptographic modified data, said received cryptographic modified data may be analyzed in order to ensure confidentiality and/or integrity of the payload data contained within the received cryptographic modified data and/or said received cryptographic modified data may be analyzed in order to ensure the authenticity of the another network node which initiated the transmission of data.

In general, the cryptographic function applied on the transmission data may ensure the confidentiality and/or integrity of the transmission data and/or the authenticity of the transmitting network node.

In order to achieve confidentiality, the data may be encrypted by the transmitting network node. Furthermore, for ensuring the integrity of data, an integrity tag may be generated by the transmitting network node. Said integrity tag may provide information regarding the integrity of the data. For example, the integrity tag may be generated by applying a hash function to at least a subset of the transmission data. In addition, authenticity information proving the identity of the transmitting network node may also be generated by the transmitting network node in order to ensure that the receiving network node is able to recognize if the data were transmitted by the intended transmitting network node.

As indicated above, the cryptographic modified data, i.e. the encrypted data and/or the integrity tag and/or the authenticity information, may be transmitted to the receiving network node. The receiving network node may apply an inverse cryptographic function on the received cryptographic modified data, i.e. the receiving network node may decrypt the received encrypted data and/or check the integrity of the transmitted data using the received integrity tag. Finally, the receiving network node may check the authenticity of the transmitting network node using received authenticity information.

The network node may comprise a means for performing an integrity check and/or an authenticity check. Specifically, the network node may comprise an integrity check subunit for performing the integrity check, and an authenticity check unit for performing the authenticity check. The integrity check subunit may provide information indicative for passing or failing the integrity check for the received data. Similarly, the authenticity check unit may provide information indicative for passing or failing the authenticity check regarding the sender of the received data. Depending on said information, the received payload data may be provided to a client entity coupled to the receiving network node or discarded. Specifically, the received payload data may be provided to a client entity if the integrity check and the authenticity check are passed. Further, the result of the integrity check and of the authenticity check may be forwarded as e.g. status information, notification or alarm to the client entity via the client interface, or to a management entity of the OBS network.

Typically, within an OBS network, the data are transmitted using bursts, wherein each burst may contain a subset of client data to be transmitted. According to further embodiments, the cryptographic function is applied on each individual optical burst to be transmitted by the transmitting network node. Specifically, the generation of the integrity tag and/or the generation of authenticity information may be performed separately for each burst transmitted from the transmitting network node to the receiving network node. In other words, each transmitted burst containing a subset of transmission data is correlated with an integrity tag and/or authenticity information. Thereby, the integrity and/or authenticity of the data in the burst can be checked burst-wise at the receiving network node which enhances the safety level.

According to further embodiments, the transmission data are symmetrically encrypted by applying the cryptographic function on said transmission data. In this case, the cryptographic modified data that is transmitted to the another network node comprises the encrypted client data. The transmitting and receiving network node may store or have access to a symmetric encryption key used for symmetric encryption. The symmetric encryption key may be negotiated between the transmitting and receiving network node or may have been provided beforehand by a central instance, e.g. a key management tool or a central scheduler of the OBS network. By using a symmetric encryption scheme, high transmission data rates may be achieved because of the high encryption performance of symmetric encryption. Preferably, Advanced Encryption Standard (AES) may be used for burst encryption, e.g. AES256. Alternatively, also asymmetric encryption schemes may be used for burst encryption.

According to further embodiments, the authenticity information is generated in the transmitting network node based on at least one input parameter known to transmitting network node and receiving network node by hashing said at least one input parameter, resulting in a related hashed input parameter. Said input parameter may be, for example, the symmetric encryption key used for encrypting the burst, the burst payload itself, a part of said burst payload, or other information only known by transmitting and receiving network nodes which may be used for ensuring safe communication. By hashing the at least one input parameter, it is practically impossible to reversely determine the input parameter out of the hashed input parameter. Thereby, even cryptographically sensitive information can be used as input parameter without lowering the safety level. The hash function used to hash the at least one input parameter is preferably a cryptographically secure hash function.

According to further embodiments, the hashed input parameter is asymmetrically encrypted by the transmitting network node using asymmetric key information. Typically, asymmetric encryption uses a pair of encryption keys, namely a public key and a private key. The private key is only known to its owner, the public key is known to all OBS network nodes. For example, the transmitting network node may encrypt the hashed input parameter using its own private key. The receiving network node may be able to decrypt the encrypted hashed input parameter using the public key of the transmitting network node. Thereby the receiving network node is able to determine if the network node which initiated the transmission is the network node the receiving node expects to be the transmitting node, by comparing the decrypted hash value and the locally computed hash value. Both hash values will be equal only if both involved nodes use the same set of input parameters to the hash function, and the related private and public key pair.

According to further embodiments, the authenticity of the transmitting network node is checked in the receiving network node. In a first step, a hash value of the at least one input parameter known to transmitting network node and receiving network node (i.e. the shared secret) may be generated. Subsequently or simultaneously, the received encrypted, hashed input parameter is decrypted using asymmetric key information. For example, in case that the hashed input parameter has been encrypted using the private key of the transmitting network node, the encrypted, hashed input parameter is decrypted by means of the public key of the transmitting network node. After decryption, the generated hashed input parameter is compared with the decrypted hashed input parameter. If the generated hashed input parameter and the decrypted hashed input parameter are equal, the authentication of the transmitting network node is passed. Otherwise, the burst may have been transmitted by an unintended/unauthorized OBS network node.

According to further embodiments, the OBS network comprises a plurality of OBS network nodes and each pair of OBS network nodes being able to communicate with each other is associated with its own symmetric encryption key. In this case, the symmetric encryption keys associated with different pairs of OBS network nodes are different to each other. In other words, each pair of OBS network nodes uses different symmetric encryption keys for symmetric encryption (transmitting network node) and decryption (receiving network node). So in an OBS network comprising n OBS network nodes, each network node has to store or have access to (n-1) symmetric encryption keys (assuming a communication relation with each other node in the network). In that way, only the respective pair of network nodes communicating with each other is able to encrypt/decrypt the payload data of the respective burst. Thereby, eavesdropping by another, unauthorized network node is prevented.

According to further embodiments, encryption of data and/or generating the integrity tag may be performed by Galois/Counter Mode encoding. GCM provides assurance of the confidentiality of burst payload using a variation of the Counter mode of operation for encryption. Furthermore GCM provides assurance of the integrity of the confidential data using a universal hash function that is defined over a binary Galois (i.e., finite) field.

According to further embodiments, the integrity tag and/or authenticity information associated with the encrypted data are transmitted simultaneously within the corresponding optical burst. In other words, a modified burst is transmitted which does not only contain the encrypted burst payload but also safety overhead information, i.e. the integrity tag and/or the authenticity information. Thereby the integrity and/or authenticity of each burst can be monitored separately and independent of the preceding and following bursts. By implementing such burst-wise safety mechanism, each burst is separately protected against a plurality of attacks compromising identity and/or authenticity of data.

For transmitting data in the OBS network, an OBS frame may be used. Said OBS frame may comprise a burst payload area into which the burst payload is mapped. The OBS frame may further comprise a guard interval which is transmitted between two consecutive burst payload areas. The safety overhead information may be mapped into the burst payload area or the guard interval. Specifically, according to an embodiment, the integrity tag and/or authenticity information are transmitted in the burst payload area. Alternatively, the integrity tag and/or authenticity information may be transmitted within the guard interval of the OBS frame. Furthermore it is possible to transmit the integrity tag within the guard interval and authenticity information within the burst payload area or vice versa.

According to a further aspect, a network node for transmitting and receiving data in an optical burst switching network is described. The network node comprises an optical interface for coupling to an OBS network and a client interface for coupling to a client entity (e.g. a computer coupled to said network node). Furthermore, the network node comprises a burst processing unit with a transmission path and a receiving path, wherein the transmission path of the burst processing unit is configured to assemble and transmit bursts based on the data provided by the client entity and wherein the receiving path of the burst processing unit is adapted to receive and de-assemble bursts coming from the OBS network. For ensuring safe communication within the OBS network, the transmission path of the burst processing unit comprises a transmitting cryptographic unit. Said transmitting cryptographic unit may be adapted to apply a cryptographic function on the transmission data resulting in cryptographic modified data.

Specifically, said transmitting cryptographic unit may be adapted to encrypt the transmission data, may be adapted to generate an integrity tag ensuring the verification of integrity of transmission data and/or may be adapted to generate authenticity information proving the identity of the network node.

The receiving path of the burst processing unit comprises a receiving cryptographic unit. Said receiving cryptographic unit may be adapted to apply an inverse cryptographic function on the received cryptographic modified data. Specifically, said receiving cryptographic unit may be configured to decrypt the cryptographic modified data, adapted to check the integrity of the cryptographic modified data using a received integrity tag, and check the authenticity of the sender of the cryptographic modified data using received authenticity information. According to further embodiments, the transmitting cryptographic unit is adapted to encrypt the data using a symmetric encryption scheme. For example, the transmitting cryptographic unit may be adapted to implement AES256 encryption. Furthermore, the network node may comprise storage means for storing a symmetric encryption key, or may have access to a storage providing a symmetric encryption key. Preferably, the network node may store or have access to a plurality of symmetric encryption keys, wherein a different symmetric encryption key is used for each pair of network nodes within the OBS network.

According to further embodiments, the transmitting cryptographic unit is adapted to generate the authenticity information by hashing at least one input parameter thereby obtaining a hashed input parameter and adapted to encrypt said hashed input parameter using asymmetric key information. As indicated above, the input parameter may be any information known by both network nodes communicating with each other. Said input parameter, may be, for example, the symmetric encryption key used for encrypting the burst, the burst payload itself or a part of said burst payload. By hashing said input parameter and encrypting said hashed input parameter using asymmetric encryption, an authentication of the transmitting network node with a high safety standard may be achieved.

According to further embodiments, the transmitting cryptographic unit is adapted to perform Galois/Counter Mode (GCM) encoding. By using GCM, assurance of the confidentiality and assurance of the integrity of the burst payload is achieved. Alternatively, other cryptographic mechanisms supporting confidentiality and integrity of the payload may be used.

According to further embodiments, the receiving cryptographic unit is adapted to decrypt received encrypted authenticity information using asymmetric key information thereby obtaining decrypted authenticity information and adapted to compare said decrypted authenticity information with a hashed input parameter generated by applying a hash function to at least one input parameter. Thereby, the authenticity of the transmitting network node can be ascertained by the receiving network node based on common knowledge, i.e. the input parameter only known by the transmitting and receiving network node.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein
- Fig. 1: shows a schematic view of an example OBS network comprising a plurality of OBS network nodes;
- Fig. 2: illustrates a schematic view of an example OBS network node;
- Fig. 3: illustrates a schematic view of an example transmitting cryptographic unit implemented in the OBS network node;
- Fig. 4: illustrates a schematic view of an example OBS frame; and
- Fig. 5: illustrates a schematic view of an example receiving cryptographic unit implemented in the OBS network node.

As indicated above, Optical Burst Switching (OBS) networks are broadcast networks by their nature, i.e. bursts sent by one OBS network node to another network node are basically available to all other network nodes as well. Without specific handling, these other nodes may read the information in the burst even if the burst is not intended to be received and processed by them. According to another example, a network node may pretend to be the sending node and thereby tricking the intended receiver to accept data not coming from the original sender. So, communication between OBS nodes is safe only if all nodes behave as required. This opens the door to several attack vectors (e.g. eavesdropping, man-in-the-middle attacks, masquerading) by network nodes not behaving as required. Also unintended security risks may occur because of technical failures, e.g. misconnections due to wrong-configured network nodes, network nodes transmitting at a wrong wavelength, in a wrong timeslot etc...

This is even more relevant as the sheer amount of data traversing an OBS network is much bigger and typically more mission critical than on other used broadcast media (that are lower bandwidth and typically more person-to-person or person-to-service related).

These problems are addressed by extending the OBS network architecture to ensure safe communication by providing
- information confidentiality,
- sender authentication check, and/or
- message (burst) integrity check.

The OBS network nodes may contain a burst processing unit that implements adaptation from and to the client signal, burst assembly and transmission, and burst receiving and disassembly. Said burst processing unit may be enhanced by at least one cryptographic unit, implementing safety mechanisms, and accessing the data and overhead path of the OBS node.

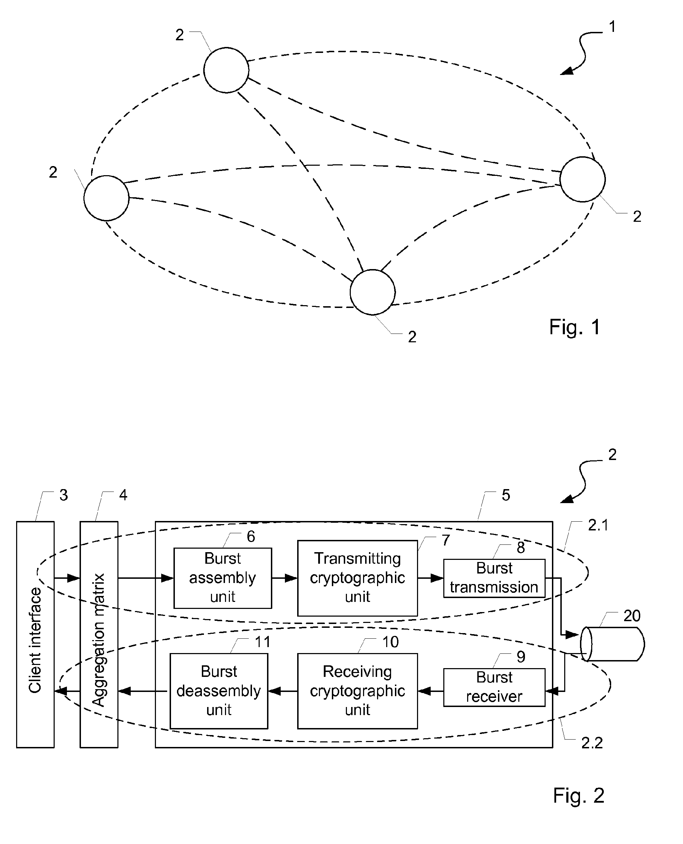

Fig. 1 shows a schematic structure of an optical burst switching (OBS) network 1. Said OBS network 1 comprises a plurality of network nodes 2. The network nodes 2 may be connected via optical communication links indicated by the dashed lines. Each optical communication link may be constituted by at least one fiber for establishing a bidirectional optical link between said network nodes 2. Said bidirectional link may be constituted by a single fiber providing communications in both directions or at least one pair of fibers wherein each fiber provides a communication link for a certain direction. Preferably, wavelength division multiplexing technology may be used for enhancing the transmission capability of the OBS network 1. The optical communication links may further comprise one or more transit network nodes through which the data bursts are routed. Within the transit network nodes, the data bursts may optionally be buffered and/or a reallocation of burst timeslots may be performed.

The optical data bursts may be transmitted through the OBS network 1 according to a burst scheduling. For example, data bursts that should be transmitted from a transmitting network node to a receiving network node have to be transmitted at a certain wavelength within a certain timeslot according to said scheduling to make sure that all optical switched on the intended optical path are correctly configured. Thereby, despite of the broadcast character of the OBS network, a specific transmission between the transmitting network node and the receiving network node may be obtained.

Fig. 2 shows an example schematic diagram an OBS network node 2. The OBS network node 2 comprises a transmission path 2.1 handling data to be transmitted through the OBS network 1 and a receiving path 2.2 handling data received by the OBS network node 2 from the OBS network 1. The OBS network node 2 comprises a client interface 3 which is adapted to receive data from a client entity (not shown) for transmission through the OBS network 1, and to send data to a client entity (not shown) after transmission through the OBS network 1. The client interface 3 is further adapted to provide data received through the OBS network 1 to the client entity. In other words, the client interface 3 provides an interface between the client entity and the OBS network 1.

The client interface 3 may be coupled with an aggregation matrix 4. In the transmission path 2.1, the aggregation matrix 4 may be adapted to receive data from a plurality of client interfaces 3 and queue said data for further upstream processing within the transmission path 2.1. Furthermore, in the receiving path 2.2, the aggregation matrix 4 may be adapted to provide data received in the OBS network node 2 to the respective client interfaces 3 connected to the aggregation matrix 4.

The aggregation matrix 4 is furthermore coupled with a burst processing unit 5. The transmission path 2.1 of the burst processing unit 5 may comprise a burst assembly unit 6. The burst assembly unit 6 is adapted to receive data from the aggregation matrix 4. Said data may be packetized data, i.e. packets with a certain framing or TDM data. The burst assembly unit 6 may be adapted to generate bursts in the electrical domain containing the data provided by the aggregation matrix 4.

The electrical bursts provided by the burst assembly unit 6 may be directly forwarded to a burst transmission unit 8 for transforming the electrical bursts into the optical domain and transmission of the optical bursts through a fiber 20 of the OBS network 1. According to embodiments, between the burst assembly unit 6 and the burst transmission unit 8 a transmitting cryptographic unit 7 is provided. The transmitting cryptographic unit 7 may be working in the electrical domain and may add safety features to the data to be transmitted in order to enhance the safety of data communications through the OBS network 1, as described later on in detail.

In the receiving path 2.2, the optical bursts to be processed by the OBS node 2 are received by a burst receiver unit 9. The burst receiver unit 9 is adapted to transform the optical bursts into electrical bursts, i.e. to transform the received bursts from the optical domain into the electrical domain. After transforming by the burst receiver unit 9, the electrical bursts are may be forwarded to a burst de-assembly unit 11 adapted to convert the electrical bursts into a data format required by the aggregation matrix 4. According to embodiments, between the burst receiving unit 9 and the burst de-assembly unit 11 a receiving cryptographic unit 10 is provided. Said receiving cryptographic unit 10 may work in the electrical domain and may be adapted to terminate safety features added by the transmitting cryptographic unit 7 of a transmitting OBS network node 2 which initiated the burst transmission.

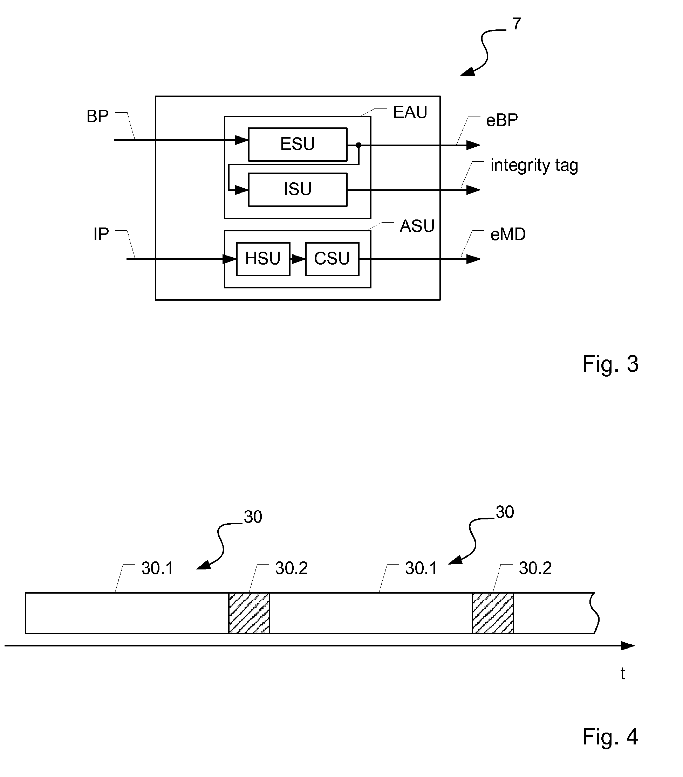

In Fig. 3, the transmitting cryptographic unit 7 is shown in closer detail. As an input, the transmitting cryptographic unit 7 may receive a burst payload BP. The burst payload BP may be encrypted by an encryption/authentication unit EAU. Specifically, the burst payload BP is forwarded to an encryption subunit ESU which may be implemented within the encryption/authentication unit EAU. The encryption subunit ESU may be adapted to encrypt the burst payload BP thereby generating an encrypted burst payload eBP. For encrypting the burst payload BP, any encryption mechanism may be used being capable of encrypting data with a high data rate. Specifically, a symmetric encryption scheme may be used, because employing symmetric encryption schemes provide high data rate encryption. More specifically, the encryption subunit ESU may be adapted to implement AES (advanced encryption standard) encryption, e.g. AES256 using a key size of 256 bits. By encrypting the burst payload, confidentiality of the transmitted data is achieved, i.e. only OBS nodes having knowledge of the encryption key are capable of decrypting the encrypted burst payload eBP, respectively, capable of receiving the data contained in the burst payload BP.

The encryption/authentication unit EAU may further comprise an integrity subunit ISU. The integrity subunit ISU may be adapted to generate integrity information, in the following also referred to as integrity tag, by which the integrity of the transmitted information may be ensured. For example, the integrity tag comprises information by means of which a manipulation of the payload data contained in a respective burst may be detected.

Preferably, the encryption/authentication unit EAU is adapted to perform Galois/Counter Mode (GCM) encryption. GCM is constructed from an approved symmetric key block cipher with a block size of 128 bits, wherein the blocks are encrypted by AES256 encryption. GCM provides assurance of the confidentiality of data using a variation of well-known Counter mode of the AES block cipher for encryption. In addition, GCM provides assurance of integrity of the confidential data using a universal hash function that is defined over a binary Galois (i.e., finite) field containing a finite number of data elements. As a result, the encryption/authentication unit EAU implementing GCM may provide at its outputs an encrypted burst payload BP and a GCM integrity tag providing information regarding the integrity of the encrypted burst payload BP. By GCM stronger authentication assurance than a (non-cryptographic) checksum or error detecting code can be provided. In particular, GCM can detect accidental, unintended modifications of the data and intentional, unauthorized modifications.

The transmitting cryptographic unit 7 may further comprise an authentication securing unit ASU. The authentication securing unit ASU may be adapted to provide information which can be used to check the authenticity of the transmitting network node. The authentication securing unit ASU may comprise an input at which at least one input parameter IP is provided. The input parameter IP may be any information having sufficient entropy which is known to the transmitting network node and the receiving network node, i.e. the pair of OBS network nodes 2 between which the data transmission should be performed. Possible input parameter IP may be, for example, the symmetric encryption key used for encrypting the burst payload BP by the encryption/authentication unit EAU, the burst payload BP or a part of said burst payload BP, a GCM Initialization Vector (IV) etc... As indicated above, the input parameter IP should have sufficient entropy in order to be robust against replay attacks.

The authentication securing unit ASU may comprise a hash subunit HSU which is adapted to compute a cryptographically secure hash function over the provided input parameters. For example, the cryptographically secure hash function may be a secure hash algorithm (SHA), specifically SHA-2 or SHA-3 algorithm. Furthermore, the authentication securing unit ASU may comprise a ciphering subunit CSU which is coupled with its input to the output of the hash subunit HSU, i.e. the ciphering subunit CSU is adapted to receive the hashed input parameter of the hash subunit HSU. The ciphering subunit CSU is adapted to encrypt or cipher the hashed input parameter. Preferably, an asymmetric encryption scheme using an asymmetric key pair is used for encrypting/decrypting the hashed input parameter. The asymmetric key pair may consist of a public key and a private key, both associated with the respective OBS network node 2. The private key may only be known by the respective OBS network node 2, whereas the public key is known by all other OBS network nodes 2 of the OBS network 1. Preferably, the private key associated with the transmitting network node 2 is used for encrypting the hashed input parameter provided to the ciphering subunit CSU. The encrypted hashed input parameter is provided at the output of the authentication securing unit ASU. In the following, the encrypted hashed input parameter is also referred to as encrypted message digest (eMD), if the burst payload BP or a part of said burst payload BP was chosen as input parameter IP.

For providing secure communication within the OBS network 1, the encrypted burst payload eBP, the integrity tag and/or the encrypted message digest eMD are transmitted through the OBS network 1 to the receiving OBS network node 2. It is worth mentioning that the aforementioned information, namely the encrypted burst payload eBP, the integrity tag and the encrypted message digest eMD are related to a specific burst be transmitted through the OBS network, i.e. each burst assembled by the burst assembly unit 6 may be correlated with a certain set of information, namely a specific encrypted burst payload eBP comprising the encrypted data of the assembled burst, a specific integrity tag related to the encrypted burst payload eBP ensuring that integrity of said encrypted burst payload eBP and/or an encrypted message digest eMD also related to the encrypted burst payload eBP by which the authenticity of the transmitting network node can be checked by the receiving OBS network node 2. In other words, by means of the transmitting cryptographic unit 7, the assembled burst is transformed in a set of information correlated with the assembled burst, wherein said set of information ensures the confidentiality and/or integrity of the transmitted data, respectively, the authenticity of the transmitting network node.

In Fig. 4, a frame structure of an OBS frame 30 being transmitted through the OBS network 1 is shown. The OBS frame 30 consists of a burst payload area 30.1 and a guard interval 30.2. The burst payload area 30.1 may be adapted to receive the encrypted burst payload eBP. The burst payload area 30.1 may have a fixed length. Alternatively, the length of the burst payload area 30.1 may be flexible or variable. The guard interval 30.2 is preferably located between two subsequent burst payload areas 30.1, wherein one burst payload area 30.1 and one guard interval 30.2 associated with said burst payload area 30.1 forms a burst. The guard interval 30.2 may be used for separating two subsequent burst payload areas 30.1 thereby, for example:
- compensating tolerances of burst payload emission time;
- providing a timeslot for allowing the transmitting and/or receiving network node to tune to a new wavelength used for transmission;
- allowing synchronization of the receiving network node to a clock of the transmitting network node;
- enabling the transport of some meta-data.

The integrity tag and/or the encrypted message digest eMD may be transported as meta-data within the guard interval 30.2. Alternatively, the integrity tag and/or the encrypted message digest eMD may be mapped together with the encrypted burst payload ePB into the burst payload area 30.1 of the OBS frame 30. In addition, when using GCM, also a counter or Initialization Vector (IV) may be transmitted within the guard interval 30.2 or alternatively in the burst payload. Finally, when using a key rotation mechanism, i.e. encryption keys are changed in a predefined manner, a key rotation indicator may also be transmitted within the guard interval 30.2 or alternatively in the burst payload.

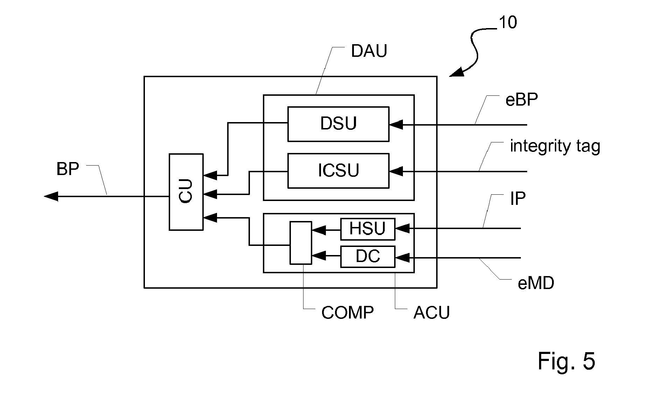

In Fig. 5, the receiving cryptographic unit 10 is shown in closer detail. The receiving cryptographic unit 10 may comprise a decryption/authentication unit DAU and an authenticity check unit ACU. The decryption/authentication unit DAU may be adapted to decrypt the received encrypted burst payload eBP and check the integrity of data contained within the received encrypted burst payload eBP. For decrypting the received encrypted burst payload eBP, a decryption subunit DSU may be implemented within the decryption/authentication unit DAU. For decrypting, the decryption subunit DSU may receive a decryption key. In case that the transmitted encrypted burst payload was ciphered by a symmetric encryption, e.g. AES256, the same key as used for encrypting the burst payload is also used for decrypting. After decryption, at the output of the decryption subunit DSU the decrypted data of the burst payload are provided.

Within the decryption/authentication unit DAU, an integrity check subunit ICSU may be implemented. The integrity check subunit ICSU may receive the integrity tag and the encrypted burst payload ePB. By means of the integrity check subunit ICSU, the integrity of the transmitted information is verified. As a result of the integrity check, an integrity check information is provided at the output of the integrity check subunit ICSU indicating if the integrity check passed or failed, i.e. if the originally transmitted data were received or not. Preferably, the decryption/authentication unit DAU is adapted to perform Galois/Counter Mode (GCM) decryption mechanisms.

Finally, the receiving cryptographic unit 10 may comprise an authenticity check unit ACU. The authenticity check unit ACU may receive as an input the encrypted message digest eMD and the input parameter IP which was used in the transmitting network node for generating the encrypted message digest eMD. As already indicated above, the input parameter IP may be, for example, the symmetric encryption key used for encrypting the burst payload BP within the encryption/authentication unit EAU, the burst payload BP or a part of said burst payload BP, the GCM Initialization Vector (IV), etc..

The authenticity check unit ACU comprises a hash subunit HSU and a decryption component DC. The hash subunit HSU may be implemented identically to the hash subunit HSU of the authentication securing unit ASU of the transmitting cryptographic unit 7 or at least the mechanism for hash generation is similar. The hash subunit HSU may be adapted to compute a cryptographically secure hash function over the provided input parameter IP. For example, the cryptographically secure hash function may be a secure hash algorithm SHA, specifically SHA-2 or SHA-3 algorithm. Specifically, the hash subunit HSU of the receiving cryptographic unit 10 may use the same secure hash function which was used when generating the encrypted message digest eMD. By using the same input parameter IP and using the same hash function, the result of the hash computation should be equal to the decrypted message digest which is obtained by decrypting the encrypted message digest eMD by means of the decryption component DC.

The decryption component DC may receive the encrypted message digest eMD. The decryption component DC may perform a decryption inverse to the encryption used at the transmitting network node. In case that an asymmetric encryption scheme is used, the decryption component DC may use a key of the asymmetric key pair (public key, private key) which is known to the receiving network node. Specifically, the decryption component DC may use the public key of the transmitting network node if the encrypted message digest eMD was encrypted using the private key of the transmitting network node. After decrypting the encrypted message digest eMD, the hashed input parameter used by the authentication securing unit ASU of the transmitting cryptographic unit 7 is rebuilt. Said decrypted hashed input parameter is compared with the hashed input parameter generated by the hash subunit HSU of the authenticity check unit ACU of the receiving cryptographic unit 10 by means of a comparator COMP. If the decrypted message digest is identical to the hashed input parameter, the authenticity check is passed, otherwise, the authenticity check failed, i.e. the data were not received from the intended transmitting network node.

The output of the decryption subunit DSU, the output of the comparator COMP and the output of the integrity check subunit ICSU are provided to a control unit CU. The control unit CU may be adapted to forward the decrypted burst payload BP to the burst de-assembly unit 11 for further routing of the data contained in the burst payload BP to the respective client entity. In case that the output of the comparator COMP or the output of the integrity check subunit ICSU indicates, that the authentication of the transmitting network node and/or the integrity check failed, the decrypted burst payload BP may be not forwarded to the burst de-assembly unit 11. Preferably, instead of the decrypted burst payload BP no payload or a payload replacement signal is forwarded to the burst de-assembly unit 11. In addition, when recognizing a failure of the authentication of the transmitting network node and/or recognizing a failure of the integrity check, a counter indicating the number of failures in burst transmission may be increased and/or an alarm signal may be generated.

Alternatively, the burst payload BP may be forwarded to the burst de-assembly unit 11 also in case of failed authentication of the transmitting network node and/or recognizing a failure of the integrity check. Preferably, in this case additional information is forwarded together with the burst payload BP, said additional information indicating the success or failure of the authentication of the transmitting network node, and the success or failure of the integrity check.

Additionally, said additional information may be forwarded, e.g. as alarm, notification or otherwise, to entities controlling or supervising the OBS network, e.g. network management systems.

Typically encryption mechanisms perform block cipher, i.e. fixed-length groups of bits, so-called blocks, are encrypted leading to a cipher also with a fixed length. For example, when using AES256 for encrypting the burst payload BP, the blocks have a fixed length of 128 bit. So, for encrypting a burst which has been assembled by the burst assembly unit 6, it may be necessary that the burst length is a multiple of the block length used by the respective encryption scheme. Alternatively, if the burst length is not equal to a multiple of the block length, the burst may not completely fill up the last block to be encrypted. So, the vacant bits of said last block have to be padded, i.e. filled up with predetermined dummy information in order to create a replenished block. The padding procedure may be defined as part of the used encryption mechanism, or be defined independently of the used encryption mechanism.

In order to enable the transmitting network node to encrypt the burst payload BP and to enable the receiving network node to decrypt the encrypted payload, at least one encryption key has to be distributed to the network nodes communicating with each other. According to a first embodiment, all trusted OBS network nodes 2 in the OBS network 1 may use the same encryption key in order to perform a symmetric encryption. Thereby, confidentiality is reached with respect to any observer outside the OBS network 1, but said approach can not prohibit an attack of any OBS network node 2 within the OBS network 1, e.g. eavesdropping of a certain OBS network node 2.

Preferably, each pair of OBS network nodes 2 communicating with each other uses its own encryption key, i.e. each OBS network node 2 stores or has access to a set of encryption keys, wherein each encryption key of the set of encryption keys is used for communications between a pair of OBS network nodes 2 in the OBS network 1. Thereby, the communication is not only protected against attacks launched by an unauthorized OBS network node 2 within or outside the OBS network 1, but also protected against unintended loss of confidentiality, e.g. due to technical problems like misconfiguration or misconnections.

When using a symmetric encryption mechanism, the symmetric encryption key for the pair of nodes may be negotiated between the communicating OBS network nodes 2 using said encryption key by means of a secure key exchange mechanism, e.g. the Diffie-Hellman algorithm. Alternatively, the symmetric encryption key may be locally generated by one of said communicating OBS network nodes 2 and transmitted to the other OBS network node by transmitting said symmetric encryption key in an encrypted way, e.g. by using an asymmetric encryption scheme. The encryption key negotiation and/or communication may be realized using data transmission within the guard interval 30.2 of the optical bursts, or within the burst payload 30.1.

According to a further alternative, a centralized key management may be implemented. For example, said centralized key management may be performed by a network management unit, e.g. a central scheduler of the OBS network 1 providing the scheduling information to the OBS network nodes 2. By using a centralized key management not only the symmetric encryption keys ensuring the confidentiality of the burst payload may be distributed but also asymmetric encryption keys used for ensuring the authenticity of the transmitting network node may be safely transmitted to the respective OBS network nodes 2.

Further, the key of the asymmetric encryption schema may be used within the entire network, i.e. each node has one private/public key pair where the public key of each node is used by all other nodes that communicate with the node, or alternatively in a pair wise manner. In the latter case, each node has one separate private/public key pair for communication with each other node. The node stores as many private keys as there are nodes for communication (one private key for each other node) and each respective public key is distributed only to the corresponding other node.

In the present document a method for safe communication between OBS network nodes (as well as a network node for the use in an OBS network) has been described. Said method provides confidentiality, integrity and/or sender authentication in OBS networks that inherently transport high data volumes via a broadcast domain. The presented safety mechanisms are generic because they are independent of the particular client signals transported via the OBS networks (e.g. packet, TDM) and their properties (e.g. bandwidth profile). Furthermore, said safety mechanisms are also generic because they are independent of the detailed architecture of transit nodes of the OBS network (e.g. burst buffering, burst timeslot reallocation).

For realizing the safety mechanisms, proven and standardized mechanisms (e.g. AES, GCM, RSA) may be used ensuring easy acceptance by users. Furthermore, the presented safety mechanisms integrate well with existing security infrastructures, e.g. PKI for asymmetric key certification. Finally, the presented method for providing safe communication in an optical burst switching network does not add significant complexity as employed mechanisms are not computationally complex and integrate well into OBS architecture as an add-on.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Method for secure communication in an optical burst switching (OBS) network (1), wherein a network node (2) of the OBS network (1) performs:
- receiving transmission data from a client entity coupled with the network node (2), the transmission data to be transmitted by the network node (2) to another network node in the OBS network (1);
- applying a cryptographic function on the transmission data resulting in cryptographic modified data; and
- transmitting the cryptographic modified data via the OBS network (1)
to the another network node,
the network node (2) further performing:
- receiving cryptographic modified data from the another network node;
and
- applying an inverse cryptographic function on the received cryptographic modified data.

2. The method according to claim 1, wherein applying a cryptographic function comprises encrypting the transmission data and/or generating an integrity tag enabling the verification of integrity of the transmission data and/or generating authenticity information enabling the verification of the identity of the network node (2).

3. The method according to claim 1 or 2, wherein applying an inverse cryptographic function on the received cryptographic modified data comprises decrypting the received cryptographic modified data and/or checking integrity of the received cryptographic modified data using an integrity tag comprised within said received cryptographic modified data and/or checking authenticity of the another network node using the received cryptographic modified data comprising an authenticity information for the another network node.

4. The method according to anyone of the preceding claims, wherein the cryptographic function is applied on each individual optical burst to be transmitted by the network node (2).

5. The method according to anyone of the preceding claims, wherein the transmission data are symmetrically encrypted by applying the cryptographic function on said transmission data.

6. The method according to anyone of the preceding claims 2 to 5, wherein authenticity information is generated in the network node (2) based on at least one input parameter (IP) known to the network node (2) and the another network node by hashing said at least one input parameter (IP) resulting in a hashed input parameter.

7. The method according to claim 6, wherein the hashed input parameter is asymmetrically encrypted by the network node using asymmetric key information resulting in an encrypted and hashed input parameter.

8. The method according to any preceding claim, wherein checking authenticity of the another network node comprises the steps of generating a hash of the at least one input parameter (IP) known to the network node (2) and the another network node, decrypting the encrypted and hashed input parameter received as authenticity information for the another network node using asymmetric key information and comparing the generated hashed input parameter with the decrypted hashed input parameter.

9. The method according to anyone of the preceding claims 5 to 8, wherein the OBS network (1) comprises a plurality of network nodes (2) and each pair of network nodes (2) being able to communicate with each other is associated with its own symmetric encryption key.

10. The method according to anyone of the preceding claims 2 to 9, wherein encryption of data and/or generating the integrity tag is performed by a data integrity securing encoding scheme, preferably Galois/Counter Mode encoding.

11. The method according to anyone of the preceding claims 2 to 10, wherein the integrity tag and/or the authenticity information are associated with at least a subset of transmission data and the integrity tag and/or the authenticity information are transmitted simultaneously with said subset of transmission data within the same optical burst.

12. The method according to anyone of the preceding claims 2 to 11, wherein the integrity tag and authenticity information is transmitted in the payload area (30.1) or the guard interval (30.2) of an OBS frame (30).

13. Network node for transmitting and receiving data in an optical burst switching (OBS) network (1) comprising:
- an optical interface for coupling to an OBS network (1);
- a client interface (3) for coupling to a client entity ;
- a burst processing unit (5) with a transmission path (2.1) and a receiving path (2.2); the transmission path (2.1) of the burst processing unit (5) being adapted to assemble and transmit bursts based on transmission data provided by the client entity, and the receiving path (2.2) of the burst processing unit being adapted to receive cryptographic modified data from the OBS network (1);
the transmission path (2.1) of the burst processing unit comprising a transmitting cryptographic unit (7) being adapted to apply a cryptographic function on the transmission data;
the receiving path (2.2) of the burst processing unit comprising a receiving cryptographic unit (10) being adapted to apply an inverse cryptographic function on the received data.

14. Network node according to claim 13, wherein applying a cryptographic function comprises encrypting the transmission data and/or generating an integrity tag enabling the verification of integrity of the transmission data and/or generating authenticity information proving the identity of the network node (2).

15. Network node according to claim 13 or 14, wherein applying an inverse cryptographic function on the received data comprises decrypting the received data and/or checking integrity of the received data using an integrity tag corresponding to the received data and/or checking authenticity of another network node using received authenticity information.

## Amended claims

### Amended claims in accordance with Rule 137(2) EPC.

1. Method for secure communication in an optical burst switching (OBS) network (1), wherein a network node (2) of the OBS network (1) performs:
- receiving transmission data from a client entity coupled with the network node (2), the transmission data to be transmitted by the network node (2) to another network node in the OBS network (1);
- applying a cryptographic function on the transmission data resulting in cryptographic modified data; and
- transmitting the cryptographic modified data via the OBS network (1) to the another network node,
the network node (2) further performing:
- receiving cryptographic modified data from the another network node; and
- applying an inverse cryptographic function on the received
cryptographic modified data
wherein applying a cryptographic function comprises generating authenticity information enabling the verification of the identity of the network node (2), wherein authenticity information is generated in the network node (2) based on at least one input parameter (IP) known to the network node (2) and the another network node by hashing said at least one input parameter (IP) resulting in a hashed input parameter.

2. The method according to claim 1, wherein applying a cryptographic function comprises encrypting the transmission data and/or generating an integrity tag enabling the verification of integrity of the transmission data.

3. The method according to claim 1 or 2, wherein applying an inverse cryptographic function on the received cryptographic modified data comprises decrypting the received cryptographic modified data and/or checking integrity of the received cryptographic modified data using an integrity tag comprised within said received cryptographic modified data and/or checking authenticity of the another network node using the received cryptographic modified data comprising an authenticity information for the another network node.

4. The method according to anyone of the preceding claims, wherein the cryptographic function is applied on each individual optical burst to be transmitted by the network node (2).

5. The method according to anyone of the preceding claims, wherein the transmission data are symmetrically encrypted by applying the cryptographic function on said transmission data.

6. The method according to anyone of the preceding claims, wherein the hashed input parameter is asymmetrically encrypted by the network node using asymmetric key information resulting in an encrypted and hashed input parameter.

7. The method according to any preceding claim, wherein checking authenticity of the another network node comprises the steps of generating a hash of the at least one input parameter (IP) known to the network node (2) and the another network node, decrypting the encrypted and hashed input parameter received as authenticity information for the another network node using asymmetric key information and comparing the generated hashed input parameter with the decrypted hashed input parameter.

8. The method according to anyone of the preceding claims 5 to 7, wherein the OBS network (1) comprises a plurality of network nodes (2) and each pair of network nodes (2) being able to communicate with each other is associated with its own symmetric encryption key.

9. The method according to anyone of the preceding claims 2 to 8, wherein encryption of data and/or generating the integrity tag is performed by a data integrity securing encoding scheme, preferably Galois/Counter Mode encoding.

10. The method according to anyone of the preceding claims 2 to 9, wherein the integrity tag and/or the authenticity information are associated with at least a subset of transmission data and the integrity tag and/or the authenticity information are transmitted simultaneously with said subset of transmission data within the same optical burst.

11. The method according to anyone of the preceding claims 2 to 10, wherein the integrity tag and authenticity information is transmitted in the payload area (30.1) or the guard interval (30.2) of an OBS frame (30).

12. Network node for transmitting and receiving data in an optical burst switching (OBS) network (1) comprising:
- an optical interface for coupling to an OBS network (1);
- a client interface (3) for coupling to a client entity;
- a burst processing unit (5) with a transmission path (2.1) and a receiving path (2.2); the transmission path (2.1) of the burst processing unit (5) being adapted to assemble and transmit bursts based on transmission data provided by the client entity, and the receiving path (2.2) of the burst processing unit being adapted to receive cryptographic modified data from the OBS network (1);
the transmission path (2.1) of the burst processing unit comprising a transmitting cryptographic unit (7) being adapted to apply a cryptographic function on the transmission data;
the receiving path (2.2) of the burst processing unit comprising a receiving cryptographic unit (10) being adapted to apply an inverse cryptographic function on the received data,
wherein the transmitting cryptographic unit (7) is adapted to generate authenticity information enabling the verification of the identity of the network node (2), wherein the network node (2) is adapted to generate authenticity information based on at least one input parameter (IP) known to the network node (2) by hashing said at least one input parameter (IP) resulting in a hashed input parameter.

13. Network node according to claim 12, wherein applying a cryptographic function comprises encrypting the transmission data and/or generating an integrity tag enabling the verification of integrity of the transmission data and/or generating authenticity information proving the identity of the network node (2).

14. Network node according to claim 12 or 13, wherein applying an inverse cryptographic function on the received data comprises decrypting the received data and/or checking integrity of the received data using an integrity tag corresponding to the received data and/or checking authenticity of another network node using received authenticity information.
